# EUROPEAN PATENT SPECIFICATION

(11) **EP 0 662 502 B1**
(45) Date of publication and mention of the grant of the patent: **13.10.1999**
(21) Application number: 94120164.2
(22) Date of filing: 20.12.1994
(51) Int. Cl.: C09K 19/30

(54) **Liquid-crystalline medium**
Flüssigkristallmischung
Mélange liquide cristallin

(30) Priority: 07.01.1994 EP 94100169
(43) Date of publication of application: 12.07.1995
(73) Proprietor: MERCK PATENT GmbH, 64293 Darmstadt (DE)
(72) Inventor: Plach, Herbert, Dr., D-64291 Darmstadt (DE)

(56) References cited:
- EP-A- 0 474 062
- WO-A-91/15556
- WO-A-93/01253
- WO-A-93/02153
- MOLECULAR CRYSTALS AND LIQUID CRYSTALS, 1989, UK, vol. 168, pages 169-182, WALZ L ET AL 'The crystal and molecular structures of four homologous, mesogenic trans,trans-4,4'-dialkyl-(1 alpha, 1'-bicyclohexyl) -4 beta -carbonitril (CCN's)'
- ANGEW. CHEM. INT.ED., vol. 23,no. 2, February 1984 WEINHEIM(DE), page 147 R.EIDENSCHINK 'liquid-crystalline 4-bicyclohexylcarbonitriles with extraordinary physical properties'

## Description

The present invention relates to an active matrix, in particular a MIM (Metal-Insulator-Metal Diode addressed Matrix) liquid crystal display, and to a nematic liquid-crystalline medium used in this display.

Liquid crystals are used, in particular, as dielectrics in display devices since the optical properties of such substances can be affected by an applied voltage. Electrooptical devices based on liquid crystals are extremely well known to those skilled in the art and may be based on various effects. Devices of this type are, for example, cells having dynamic scattering, DAP (deformation of aligned phases) cells, guest/host cells, TN cells having a twisted nematic structure, STN (supertwisted nematic) cells, SBE (super-birefringence effect) cells and OMI (optical mode interference) cells. The most common display devices are based on the Schadt-Helfrich effect and have a twisted nematic structure.

The liquid-crystal materials must have good chemical and thermal stability and good stability toward electrical fields and electromagnetic radiation. Furthermore, the liquid-crystal materials should have low viscosity and give short addressing times, low threshold voltages and high contrast in the cells. Furthermore, they should have a suitable mesophase, for example, for the above mentioned cells, a nematic or cholesteric mesophase, at customary operating temperatures, i.e. in the broadest possible range above and below room temperature. Since liquid crystals are generally used as mixtures of a plurality of components, it is important that the components are readily miscible with one another. Further properties, such as electrical conductivity, dielectric anisotropy and optical anisotropy, must meet various requirements depending on the cell type and the area of application. For example, materials for cells having a twisted nematic structure should have positive dielectric anisotropy and low electrical conductivity.

For example, the media desired for matrix liquid-crystal displays containing integrated nonlinear elements for switching individual image points (MLC displays) are those having high positive dielectric anisotropy, broad nematic phases, relatively low birefringence, very high specific resistance, good UV and temperature stability of the resistance and low vapour pressure.

MIM displays [J.G. Simmons, Phys. Rev. Vol. 155, No. 3, pp. 657-660; K. Niwa et al., SID 84 Digest, pp. 304-307, June 1984] of this type are particularly suitable for TV applications (for example pocket TV sets) or for high-information displays for computer applications (laptops) and in automobile or aircraft construction. In addition to problems with respect to the angle dependency of the contrast and the switching times, problems result in MIM displays due to inadequate specific resistance of the liquid-crystal mixtures. As the resistance decreases, the contrast of an MIM display worsens and the problem of "after image elimination" may occur. Since the specific resistance of the liquid-crystal mixture generally decreases over the life of an MIM display due to interaction with the internal surfaces of the display, a high (initial) resistance is very important to give acceptable service lives. In particular, in the case of low-voltage mixtures, it was hitherto not possible to achieve very high specific resistances. It is furthermore important that the specific resistance increases as little as possible with increasing temperature and after heating and/or exposure to UV radiation. The MIM displays of the prior art do not satisfy current demands.

A serious problem in fabricating the MIM diode addressed matrix liquid crystal display panel which has a large number of scanning electrodes is to reduce stray capacitances which are parallel to the MIM diodes. A higher addressing voltage is required if this capacitance is too large as compared with the capacitance of the pixel to be addressed with the MIM diode. Furthermore, the capacitance of the MIM diodes must be small relative to that of the pixels in order to hold the voltage across the pixels constant while the pixel is in the non-selected state. Otherwise, undesired voltages will be applied across the pixels of the non-selected scanning line, since many pixels are connected in the same electrode.

One possible solution of this problem is to use a special sandwich construction the so-called "lateral MIM diode" [S. Morozumi et al., Japan Display '83, pp. 404-407,1983].

Another approach for the solution of this problem is the application of liquid-crystalline media with relatively high capacitances.

It was hitherto possible to prepare liquid-crystalline media with values for birefringence and phase range (e.g. clearing point: ≥ 70°) which are required for practical use, but only with relatively low capacitances of the liquid crystalline media, if value is placed on values of about 98 % for the holding ratio under extreme conditions (e.g. after exposure to UV).

The intemational Patent Application WO 93/01253 dicloses MIM displays in which the nematic mixture comprises compounds of formula I and 2,3-difluoro-1,4-phenylene derivatives.

Furthermore WO 93/01253 suggests to add compounds of formula II to these mixtures.

All the mixtures disclosed show high threshold voltages of 2.2 Volts or more and ε_{⊥} between 4.2 and 5.7.

The WO 91-15556 A1 and the WO 93-02153 A1 relate to LC media with high positive Δε and high resistivity, which are used in LC displays with a high holding ratio and a low threshold voltage. The EP 0 474 062 A2 discloses LC displays of the ECB type comprising an LC mixture with negative Δε, wherein the LC mixture consists essentially of dielectrical negative and neutral compounds.

Thus, there continues to be a great demand for MIM displays of very high specific resistance, high capacitances and at the same time a broad operating temperature range, short switching times and low threshold voltage which do not have these disadvantages or only do so to a lesser extent.

For TN (Schadt-Helfrich) cells, media are desired which facilitate the following advantages in the cells:
- broadened nematic phase range (in particular down to low temperatures),
- switchability at extremely low temperatures (outdoor use, automobiles, avionics),
- increased stability to UV radiation (longer life).
- low threshold voltages

The media available from the prior art do not make it possible to achieve these advantages whilst simultaneously retaining the other parameters.

The invention has the object of providing media, in particular for active matrix displays of this type, which do not have the above mentioned disadvantages or only do so to a lesser extent, and preferably at the same time have very high specific resistances and low threshold voltages.

It has now been found that this object can be achieved if media according to the invention are used in displays.

The invention relates to a active matrix liquid crystal display comprising
- a thin film transistor or a MIM diode array,
- a pair of parallel substrates and a nematic liquid crystalline medium disposed between the pair of substrates, characterized in that the nematic liquid crystalline medium is based on
   a) a component A comprising one or more compounds of the formula I 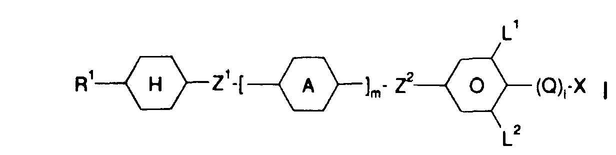 wherein
      - R¹: is alkyl, alkoxy, alkenyloxy, oxaalkyl or alkenyl with 1 to 15 C atoms,
      - Q: is CF₂, OCF₂, OCF₂CF₂ or a single bond,
      - X: is F or Cl
      - Z¹ and Z²: are each independently -C≡C-, -CH₂CH₂-, -CO-O-or a single bond, 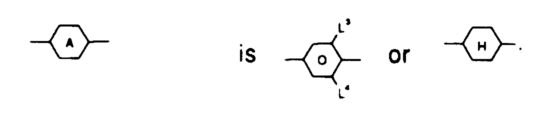
      - L¹, L², L³ and L⁴: are each independently H or F,
      - l: is 0 or 1, and
      - m: is 0 or 1,
   b) a component B comprising one or more compounds of the formula II 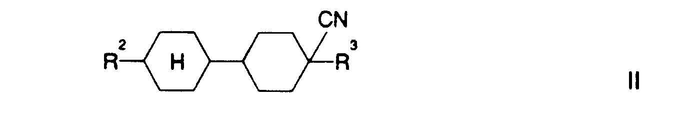 wherein
      - R²: has the meaning given for R¹,
      - R³: has the meaning given for R¹,
   c) a component C comprising one or more compounds of formula III 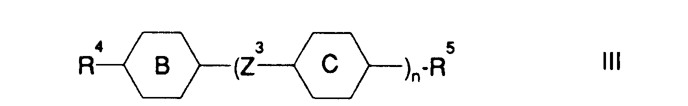 wherein 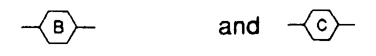 have the meaning given for

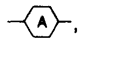

   - n: is1,2 or 3,
   - R⁴ and R⁵: have the meaning given for R¹,
   and
   - Z³: has the meaning given for Z¹.

The invention relates to a nematic liquid-crystal medium of the above given composition.

The liquid-crystal active addressed displays according to the invention facilitate a significant broadening of the parameter latitude available.

The achievable combinations of clearing point, viscosity at low temperature, thermal and UV stability and dielectric anisotropy or threshold voltage are far superior to previous materials from the prior art.

The requirement for a high clearing point, a nematic phase at -40°C and a moderate Δε and a high value of ε_{⊥} was previously only achievable to an unsatisfactory extent. Although systems such as those disclosed in WO 93/01253 have comparable clearing points and comparatively favorable viscosities, they show, however, no sufficient threshold voltages.

Other mixture systems have comparable viscosities and values of Δε, but only have clearing points in the region of 60 °C.

The liquid-crystal mixtures according to the invention make it possible to achieve, at low viscosities at low temperatures (at -20°C ≤ 700, preferably ≤ 750 mm²/s; at 30 °C ≤ 3000, preferably ≤ 2700 mm²/s), simultaneously dielectric anisotropy Δε ≥ 3.0 preferably ≥ 4.0 in particular 3.0 to 6.0, and values of ε_{⊥} ≥ 4.0, preferably ≥ 4.5, clearing points above 65°, preferably above 85°, and a high value for the specific resistance, which means that excellent active matrix displays can be achieved.

A further aspect of the invention is an active matrix display as described in claim 1, characterized in that the nematic liquid crystalline medium exhibits a dielectric anisotropy of about 2.0 to 17.0.

A further aspect of the invention is an active matrix display as described in claim 1 or 2, characterized in that the nematic liquid crystalline medium exhibits a clearing point higher than 75 °C.

It goes without saying that a suitable choice of the components of the mixtures according to the invention also allows higher clearing points (for example above 90°) to be achieved at higher threshold voltages or lower clearing points to be achieved at lower threshold voltages while retaining the other advantageous properties. The active matrix displays according to the invention preferably operate in the first transmission minimum of Gooch and Tarry [C.H. Gooch and H.A. Tarry, Electron. Lett. 10, 2-4, 1974; C.H. Gooch an dH.A.Tarry, Appl. Phys., Vol. 8, 1575-1584, 1975], in this case, a lower dielectric anisotropy in the second minimum is sufficient in addition to particularly favorable electrooptical properties, such as, for example, high gradient of the characteristic line and low angle dependency of the contrast (German Patent 30 22 818) at the same threshold voltage as in an analogous display. The optical pathway d An of the inventive active matrix displays is between 0.35 and 0.5, preferably between 0.35 and 0.45. This allows significantly higher specific resistances to be achieved in the first minimum using the mixtures according to the invention than using mixtures containing benzonitrile derivatives. A person skilled in the art can use simple routine methods to produce the birefringence necessary for a prespecified cell thickness of the active matrix display by a suitable choice of the individual components and their proportions by weight.

The viscosity at 20 °C is preferably ≤ 25 mPa.s. The nematic phase range is preferably at least 90°, in particular at least 110°. This range preferably extends at least from -30° to +80°.

Measurements of the "capacity holding ratio" (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] have shown that mixtures according to the invention containing compounds of the formula I exhibit a considerably smaller decrease in the HR with increasing temperature than do analogous mixtures in which the compounds of the formula I are replaced by cyanophenylcyclohexanes of the formula 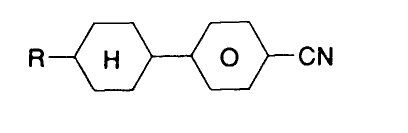 The UV stability of the mixtures according to the invention is also considerably better, i.e. they exhibit a significantly smaller decrease in the HR on exposure to UV radiation.

The threshold voltages V10/0/20 achieved are generally ≤ 2.85 volts and are preferably in the range 1.5 to 2.1 volts.

The media according to the invention are preferably based on a plurality (preferably two or more) of compounds of the formula I, i.e. the proportion of these compounds is ≥ 25 %, preferably ≥ 40 %.

The individual compounds of the formulae I, II and III and their subformulae which can be used in the media according to the invention are either known or can be prepared analogously to the known compounds.

Preferred embodiments are indicated below:
- a medium contains one or more compounds selected from the group comprising the general formulae la to II 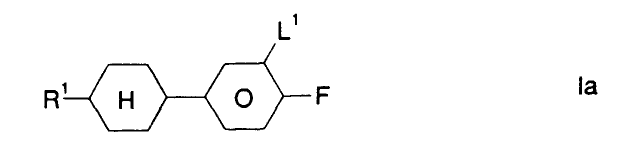 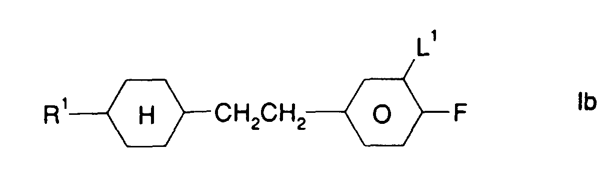 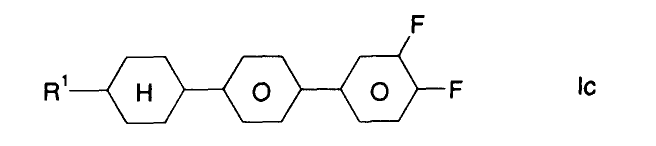 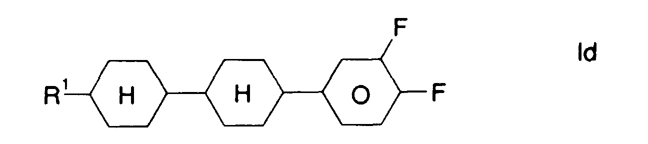 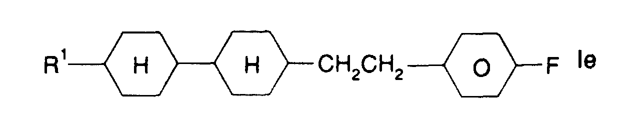 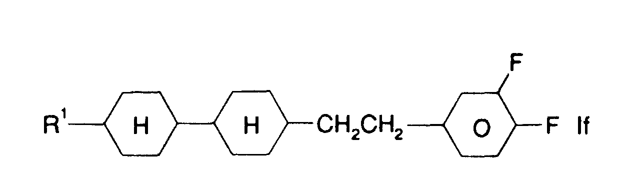 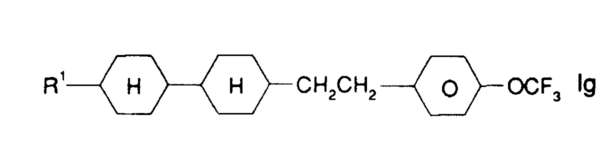 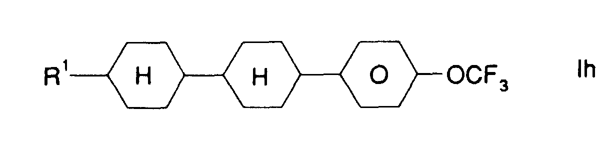 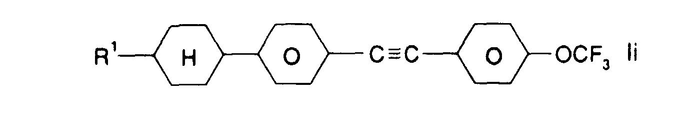 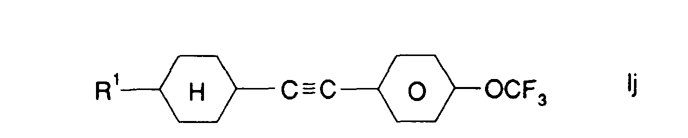 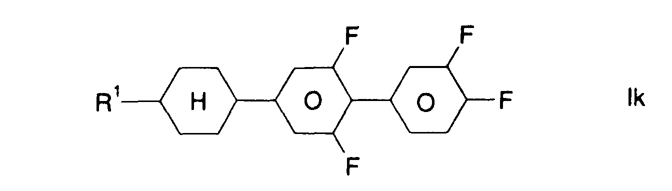 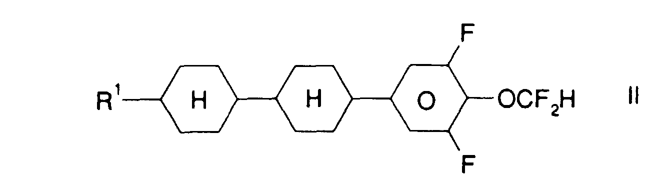 in which R¹ and L¹ have the meaning given ;
- a medium contains one or more compouns selected from the group comprising the general formulae IIIa to IIIf 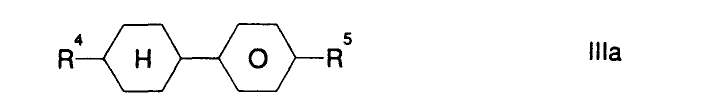 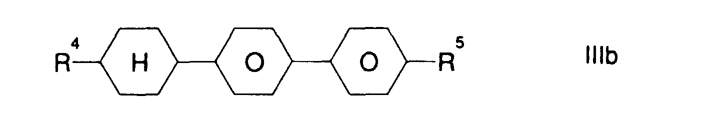 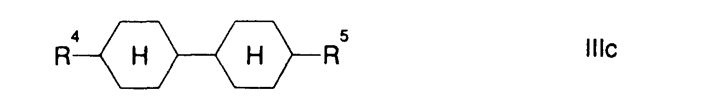 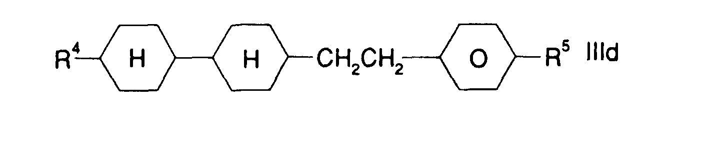 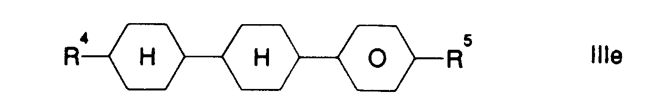 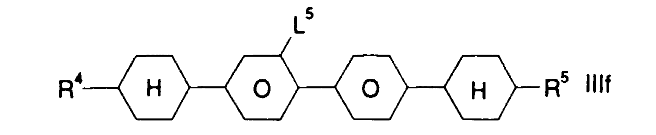 in which L⁵ is H or F.

A further aspect of the present invention is a nematic liquid crystalline medium comprising a composition as defined in any one of the claims 1 to 5, in particular consisting essentially of
40-95, preferably 65-85 % by weight of component A
3-35, preferably 5-20 % by weight of component B
4-50, preferably 10-30 % by weight of component C
In another preferred embodiment component A essentially consists of
15 to 45 % of at least one compound of formula Ib,
5 to 25 % of at least one compound of formula Ii,
15 to 40 % of at least one compound of formula Ij and
0 to 10 % of at least one compound of formula If.

In another preferred embodiment component C essentially consists of
40 to 80 % by weight of at least one compound of formula IIIa, and
20 to 60 % by weight of at least one compound of formula IIIf.

It has been found that even a relatively small proportion of compounds of the formulae I, II and III mixed with conventional liquid-crystal materials results in a significant improvement in the addressing times and in low threshold voltages, and at the same time broad nematic phases with low smectic-nematic transition temperatures are observed.

The term "alkyl" covers straight-chain and branched alkyl groups having 1-7 carbon atoms, in particular the straight-chain groups methyl, ethyl, propyl, butyl, pentyl, hexyl, heptyl, octyl, nonyl and decyl. Groups having 2-5 carbon atoms are generally preferred.

The term "alkenyl" covers straight-chain and branched alkenyl groups having 2-7 carbon atoms, in particular the straight-chain groups. Preferred alkenyl groups are C₂-C₇-1E-alkenyl, C₄-C₇-3E-alkenyl, C₅-C₇-4-alkenyl, C₆-C₇-5-alkenyl and C₇-6-alkenyl, in particular C₂-C₇-1E-alkenyl, C₄-C₇-3E-alkenyl and C₅-C₇-4-alkenyl. Examples of preferred alkenyl groups are vinyl, 1E-propenyl, 1E-butenyl, 1E-pentenyl, 1E-hexenyl, 1E-heptenyl, 3-butenyl, 3E-pentenyl, 3E-hexenyl, 3E-heptenyl, 4-pentenyl, 4Z-hexenyl, 4E-hexenyl, 4Z-heptenyl, 5-hexenyl, 6-heptenyl and the like. Groups having up to 5 carbon atoms are generally preferred.

Through a suitable choice of the meanings of R₁, R₂, R₃, 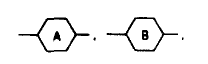 Z¹, Z², Z³, Z⁴, L¹, L², Q and X, the adressing times, the threshold voltage, the gradient of the transmission characteristic lines, etc., can be modified as desired. For example, 1E-alkenyl radicals, 3E-alkenyl radicals, 2E-alkenyloxy radicals and the like generally give shorter addressing times, improved nematic tendencies and a higher ratio between the elastic constants k₃₃ (bend) and k₁₁ (splay) compared with alkyl and alkoxy radicals. 4-Alkenyl radicals, 3-alkenyl radicals and the like generally give lower threshold voltages and lower values of k₃₃/k₁₁ compared with alkyl and alkoxy radicals. A -CH₂CH₂group in Z¹ and Z² generally results in higher values of k₃₃/k₁₁ compared with a simple covalent bond. Higher values of k₃₃/k₁₁ facilitate, for example, flatter transmission characteristic lines in MIM cells.

The optimum mixing ratios of the compounds of the formulae I, II and III depends substantially on the desired properties, on the choice of the components of the formulae I, II and III and on the choice of any other components which may be present. Suitable mixing ratios within the above mentioned range can easily be determined from case to case.

The total amount of compounds of the formulae I, II and III in the mixtures according to the invention is not crucial. The mixtures may therefore contain one or more further components in order to optimize various properties. However, the effect observed on the addressing times and the threshold voltage is generally greater the higher the total concentration of compounds of the formulae I, II and III.

In a particularly preferred embodiment, the media according to the invention contain compounds of the formula I in which (Q)ₗ-X is CF₃, OCF₃ or OCHF₂. A favorable synergistic effect with the compounds of the formula in which (Q)ₗ-X is F results in particularly advantageous properties.

The type and amount of the polar compounds having positive dielectric anisotropy is not crucial per se. A person skilled in the art can use simple routine experiments to select suitable materials from a wide range of known and, in many cases, also commercially available components and base mixtures. The component A of the media according to the invention preferably contains one or more compounds of the formula I, in addition to the compounds of the formula I' 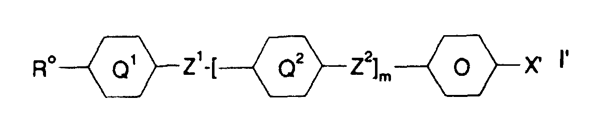 in which Z¹, Z² and m are as defined under the formula I, Q¹ and Q² are each, independently of one another, 1,4-phenylene, trans-1,4-cyclohexylene or 3-fluoro-1,4-phenylene, and one of the radicals Q¹ and Q² is trans-1,3-dioxane-2,5-diyl, pyrimidine-2,5-diyl, pyridine-2,5-diyl or 1,4-cyclohexenylene,
R^{o} is n-alkyl, n-alkenyl, n-alkoxy or n-oxaalkyl, in each case having up to 9 carbon atoms, X' is halogen, CF₃, OCF₃ or OCHF₂.

In a preferred embodiment, the media according to the invention for active matrix applications are based on compounds of the formula I' in which X' is F. It goes without saying that smaller or larger proportions of other compounds of the formula I' are also possible.

The construction of the active matrix displays according to the invention from polarizers, electrode base plates and electrodes with surface treatment corresponds to the construction which is conventional for displays of this type. The term conventional construction here is widely drawn and also covers all derivatives and modifications of the active matrix display, in particular also lateral MIMs.

An essential difference between the displays according to the invention and those customary hitherto based on the twisted nematic cell is, however, the choice of liquid-crystal parameters in the liquid-crystal layer.

The liquid-crystal mixtures which can be used according to the invention are prepared in a manner which is conventional per se. In general, the desired amount of the components used in the lesser amount is dissolved in the components making up the principal constituent, expediently at elevated temperature. It is also possible to mix solutions of the components in an organic solvent, for example in acetone, chloroform or methanol, and, after thorough mixing, to remove the solvent again, for example by distillation.

The dielectrics may also contain other additives known to those skilled in the art and described in the literature. For example, 0-15 % of pleochroic dyes or chiral dopes can be added.

C denotes a crystalline phase, S a smectic phase, S_{B} a smectic B phase, N a nematic phase and I the isotropic phase.

V₁₀ denotes the voltage for 10 % transmission (view angle perpendicular to the plate surface). ton denotes the switch-on time and toff the switch-off time at an operating voltage corresponding to 2.5 times the value of V₁₀. Δε denotes the optical anisotropy and no the refractive index. Δε denotes the dielectric anisotropy Δε = ε∥-ε_{⊥} , where ε∥ denotes the dielectric constant parallel to the longitudinal molecular axes and ε_{⊥} denotes the dielectric constant perpendicular thereto. The electrooptical data were measured in a TN cell at the 1st minum (i.e. at a d · Δn value of 0.5) at 20 °C, unless expressly stated otherwise. The optical data were measured at 20 °C, unless expressly stated otherwise.

The examples below are intended to illustrate the invention without representing a limitation. Above and below all temperatures are given in °C. The percentages are percent by weight.

In the present application and in the examples below, the structures of the liquid-crystal compounds are indicated by acronyms, with the transformation into chemical formulae taking place in accordance with Tables A and B below. The structures given in Tables A and B are preferred components of the inventive nematic media. All radicals CₙH₂ₙ₊₁ are straight-chain alkyl radicals containing n or m carbon atoms. The coding in Table B is self-evident. In Table A, only the acronym for the base structure is given. In individual cases, the acronym for the base structure is followed, separated by a hyphen, by a code for the substituents, R¹, R², L¹, L² and L³.

| Code for R¹, R², L¹, L², L³ | R¹ | R² | L¹ | L² | L³ |
|---|---|---|---|---|---|
| nm | CₙH₂ₙ₊₁ | CₘH₂ₘ₊₁ | H | H | H |
| nOm | CₙH₂ₙ₊₁ | OCₘH₂ₘ₊₁ | H | H | H |
| nO.m | OCₙH₂ₙ₊₁ | CₘH₂ₘ₊₁ | H | H | H |
| n | CₙH₂ₙ₊₁ | CN | H | H | H |
| nN.F | CₙH₂ₙ₊₁ | CN | H | F | H |
| nF | CₙH₂ₙ₊₁ | F | H | H | H |
| nOF | OCₙH₂ₙ₊₁ | F | H | H | H |
| nCl | CₙH₂ₙ₊₁ | Cl | H | H | H |
| nF.F | CₙH₂ₙ₊₁ | F | H | F | H |
| nOmFF | CₙH₂ₙ₊₁ | OCₘH₂ₘ₊₁ | F | F | H |
| nmF | CₙH₂ₙ₊₁ | CₘH₂ₘ₊₁ | F | H | H |
| nCF₃ | CₙH₂ₙ₊₁ | CF₃ | H | H | H |
| nOCF₃ | CₙH₂ₙ₊₁ | OCF₃ | H | H | H |
| nOCF₂ | CₙH₂ₙ₊₁ | OCHF₂ | H | H | H |
| nS | CₙH₂ₙ₊₁ | NCS | H | H | H |
| rVsN | CᵣH₂ᵣ₊₁-CH=CH-CₛH₂ₛ- | CN | H | H | H |
| rEsN | CᵣH₂ᵣ₊₁-O-C₂H₂ₛ- | CN | H | H | H |
| nNF | CₙH₂ₙ₊₁ | CN | F | H | H |
| nAm | CₙH₂ₙ₊₁ | COOCmH₂ₘ₊₁ | H | H | H |
| nF.F.F | CₙH₂ₙ₊₁ | F | H | F | F |
| nCl.F.F | CₙH₂ₙ₊₁ | Cl | H | F | F |
| NCF₃.F.F | CₙH₂ₙ₊₁ | CF₃ | H | F | F |
| nOCF₃.F.F | CₙH₂ₙ₊₁ | OCF₃ | H | F | F |
| nOCF₂.F.F | CₙH₂ₙ₊₁ | OCHF₂ | H | F | F |
| nOCF₃.F | CₙH₂ₙ₊₁ | OCHF.₃ | H | F | H |

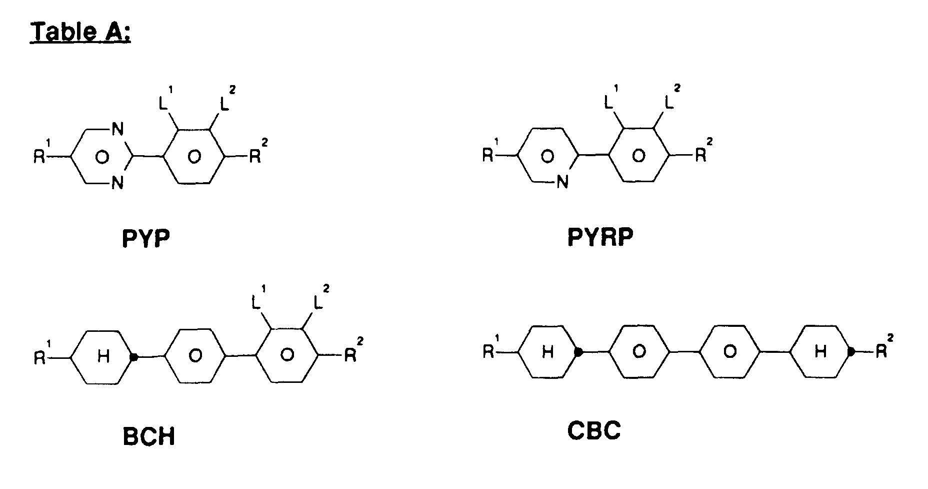

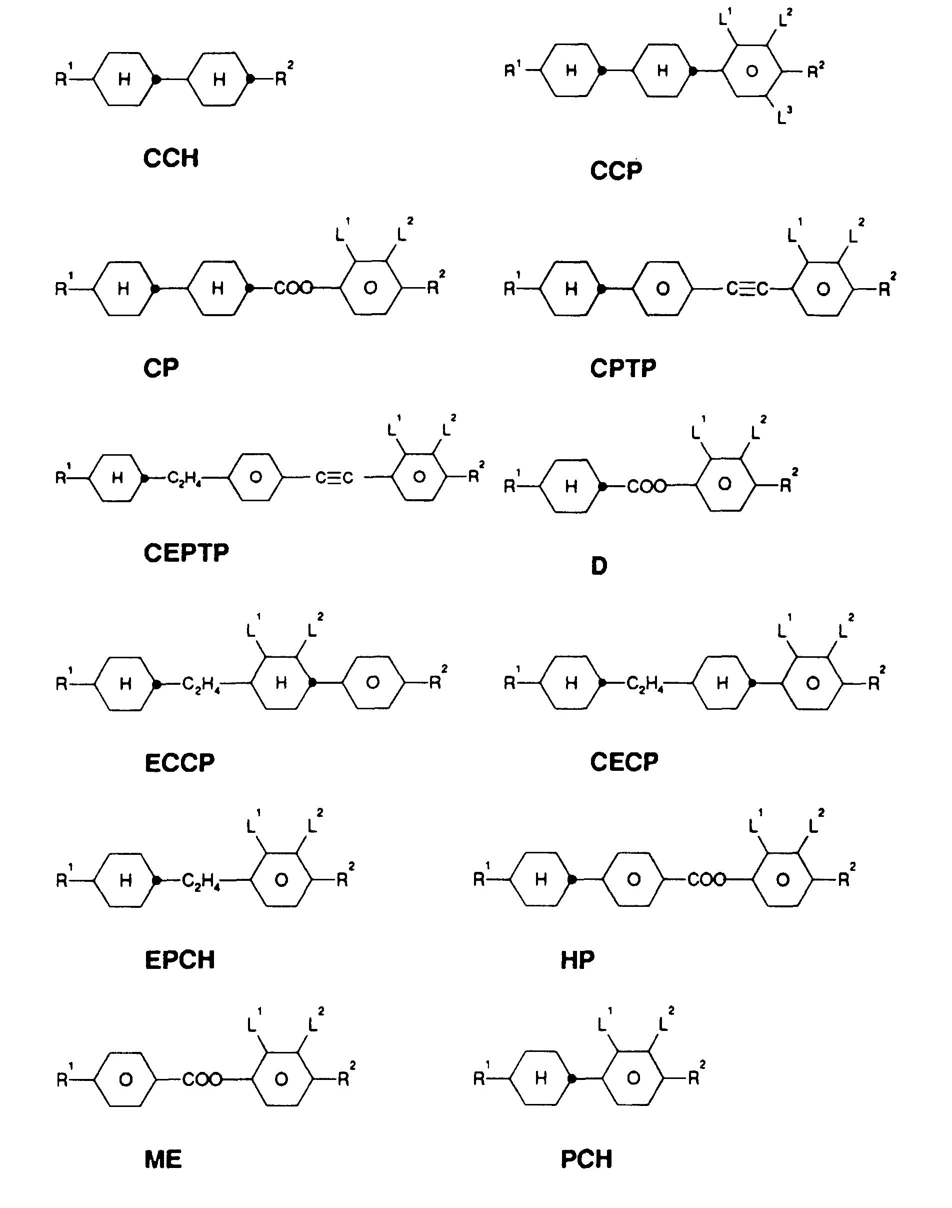

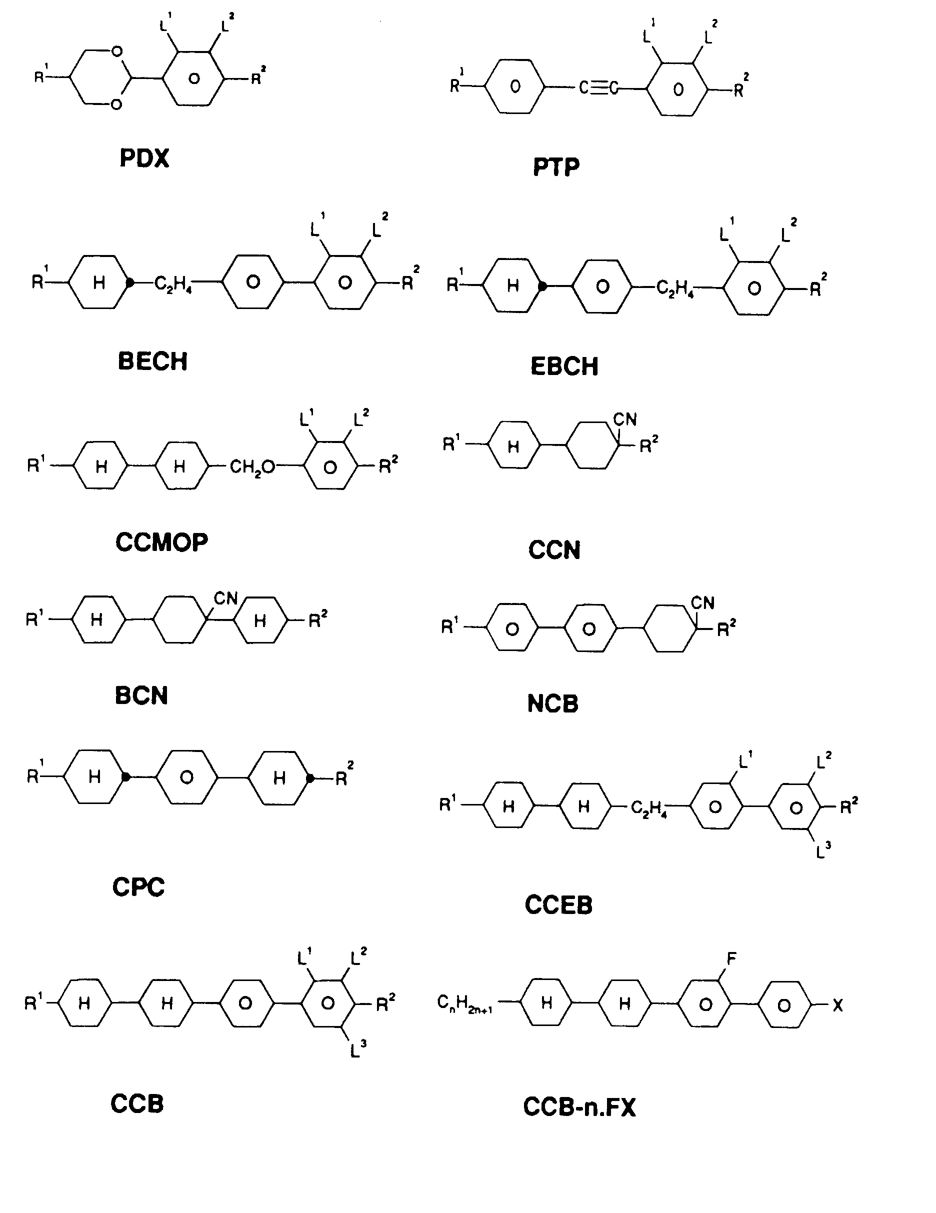

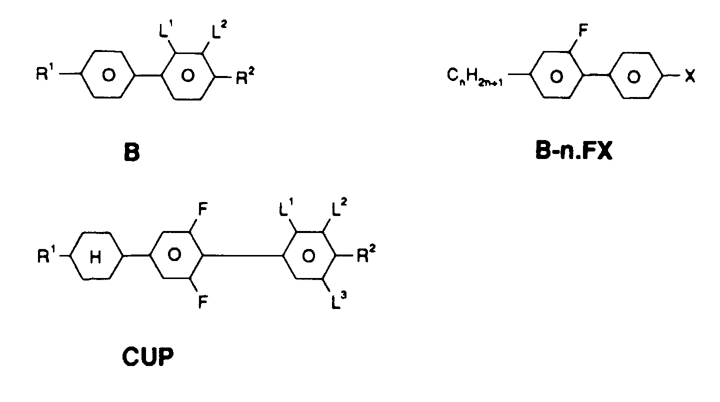

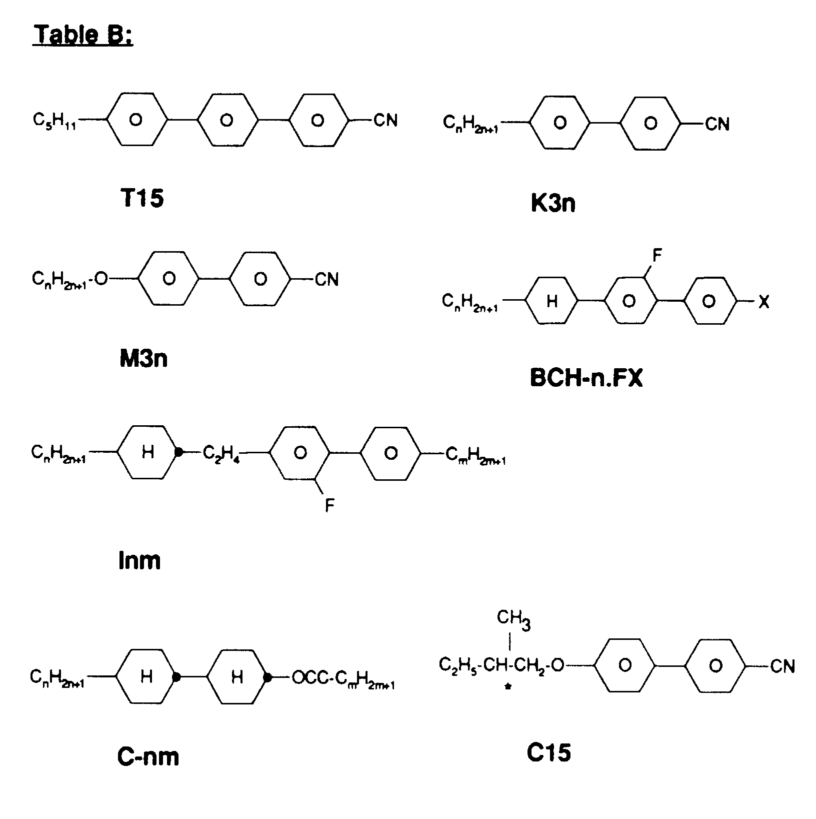

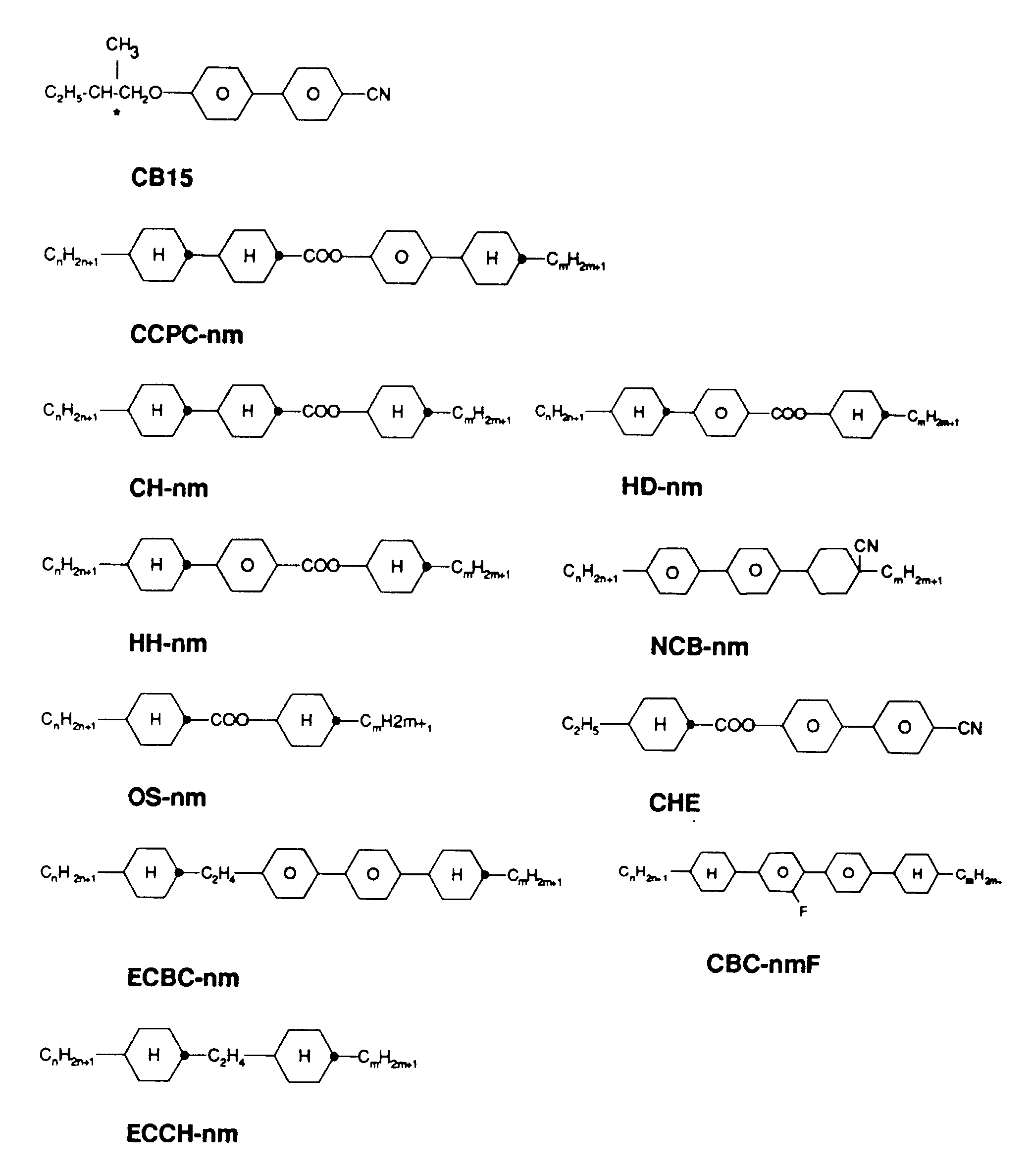

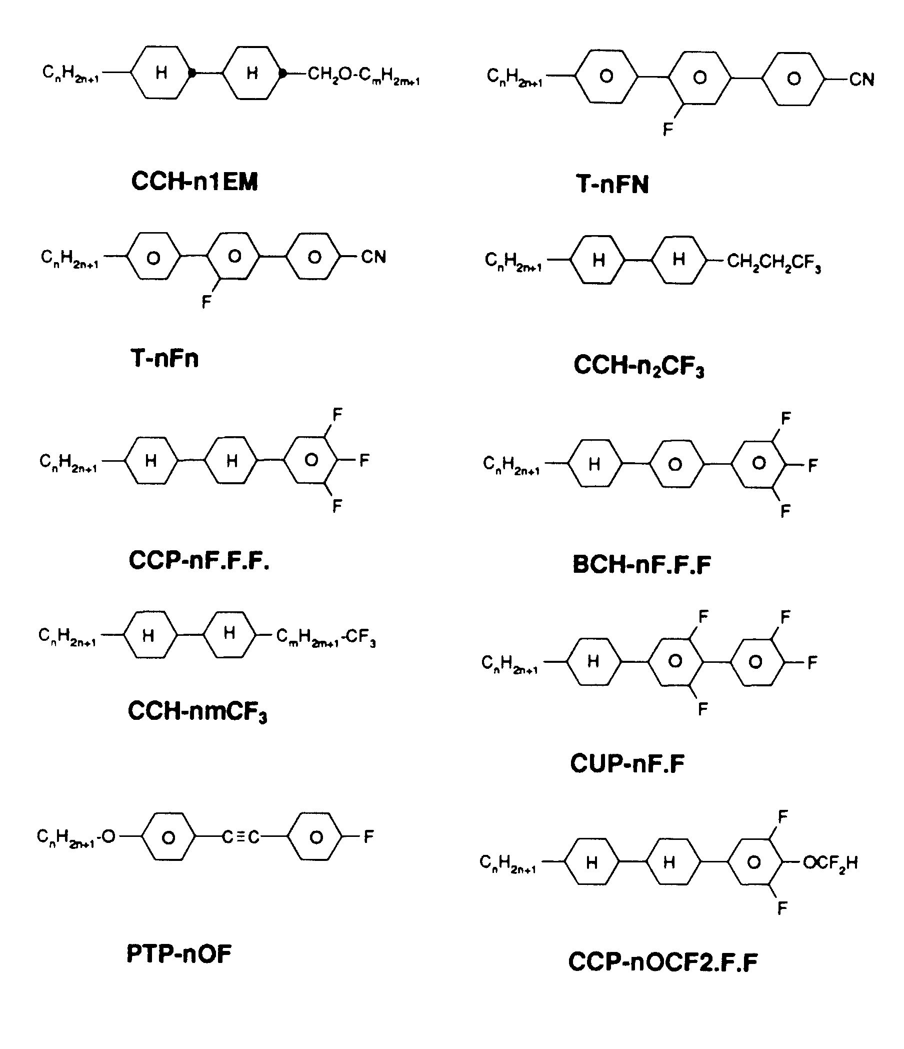

### Example 1

| | | |
|---|---|---|
| CCN-55 | 10.0 % | S < -40 N +90 |
| PCH-301 | 11.0 % | Δn 0.1056 |
| PCH-302 | 5.0 % | Δε +4.8 |
| CCP-30CF3 | 4.0 % | ε_{⊥} 4.7 |
| BCH-2F.F | 8.0 % | Viscosity (20 C): 33 mm²/s |
| BCH-3F.F | 8.0 % | V₁₀ = 1.79 Volt |
| BCH-5F.F | 8.0 % | V₉₀ = 2.72 Volt |
| CUP-3F.F | 6.0 % | |
| CUP-5.F.F | 6.0 % | |
| CCP-30CF2.F.F | 9.0 % | |
| CCP-5CF2.F.F | 14.0 % | |
| CBC-33F | 5.0 % | |
| CBC-53F | 4.0 % | |
| CBC-55F | 2.0 % | |

## Claims

1. An improved active matrix liquid crystal display comprising
- a thin film transistor or MIM diode
- a pair of parallel substrates and a nematic liquid crystalline medium disposed between the pair of substrates, characterized in that the nematic liquid crystalline medium essentially consists of
a) a component A comprising one or more compounds of the formula I 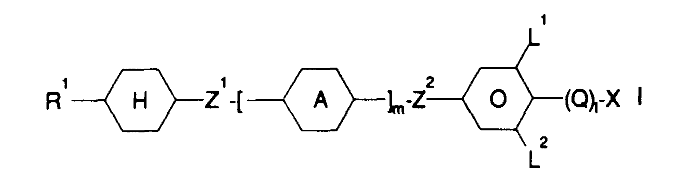 wherein
R¹ is alkyl, alkoxy alkenyloxy, oxaalkyl or alkenyl with 1 to 15 C atoms,
Q is CF₂, OCF₂, OCH₂CF₂, OCF₂CF₂,
X is H, F or Cl,
Z¹ and Z² are each independently -C≡C, -CH₂CH₂-, -CO-O- or a single bond, 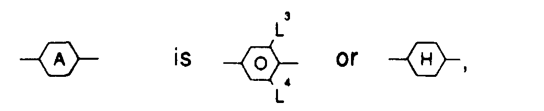
L¹, L², L³ and L⁴ are each independently H or F,
l is 0 or 1, and
m is 0 or 1,
with the proviso that I is 1 in the case that X is H
b) a component B comprising one or more compounds of the formula II 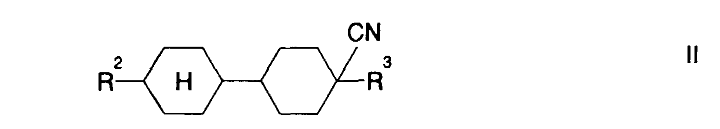 wherein
R² has the meaning given for R¹,
R³ has the meaning given for R¹,
c) a component C comprising one or more compounds of formula III 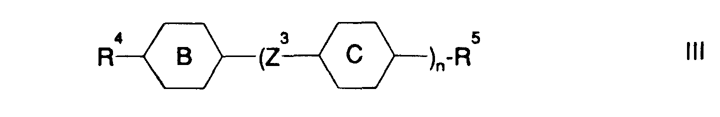 wherein 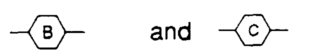 have the meaning given for 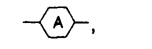
n is 1,2 or 3,
R⁴ and R⁵ have the meaning given for R¹,
and
Z³ has the meaning given for Z¹.

2. An active matrix liquid crystal display according to Claim 1, characterized in that the nematic liquid crystalline medium exhibits a dielectric anisotropy of about 2.0 to 17.0.

3. An active matrix liquid crystal display according to Claim 1 or 2 characterized in that the nematic liquid crystalline medium exhibits a clearing point higher than 75 °C.

4. An active matrix liquid display according to one of Claims 1 to 3 characterized in that the compound of the formula I is selected from the group consisting of the compounds of the formulae Ia to II 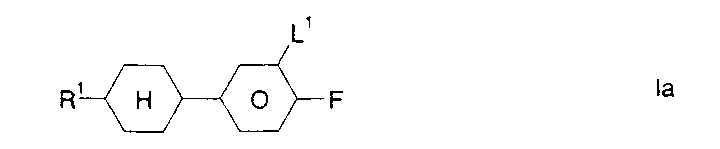 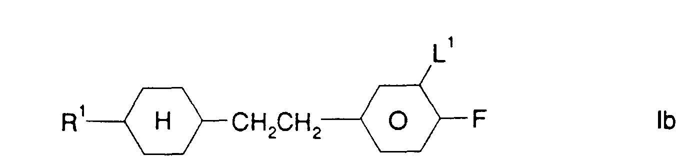 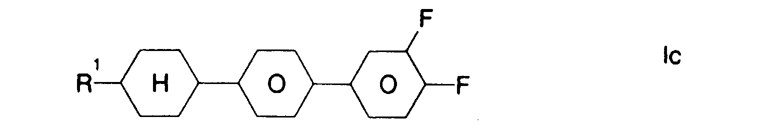 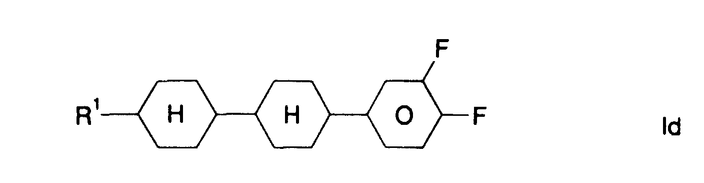 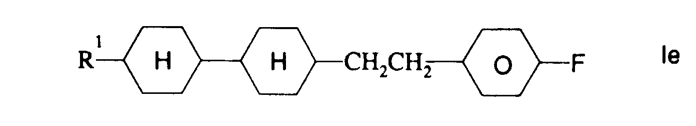 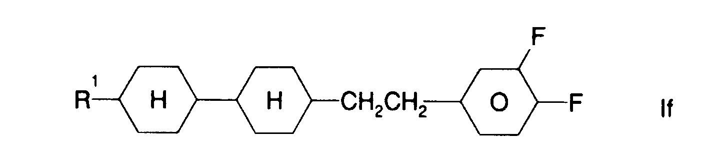 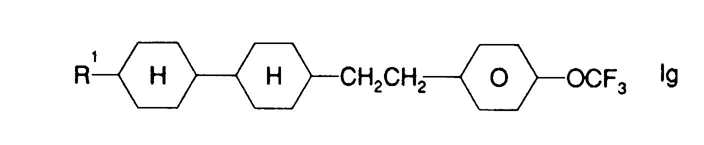 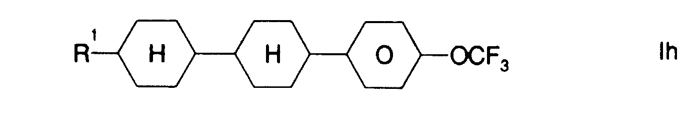 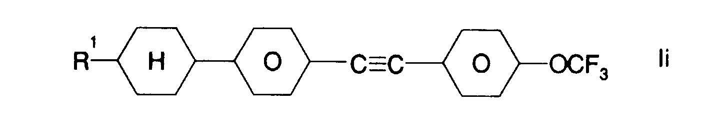 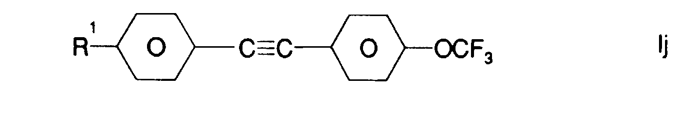 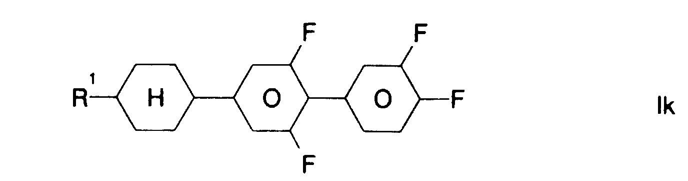 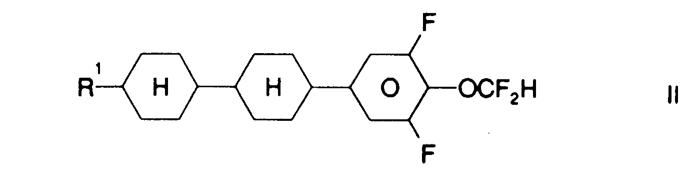 in which R1 and L1 have the meaning given.

5. An active matrix liquid crystal display according to one of the Claims 1 to 4, characterized in that the compound of the formula III is selected from the group consisting of the compounds of the formulae IIIa to IIIf 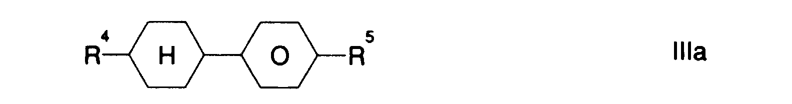 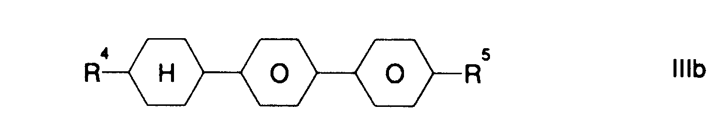 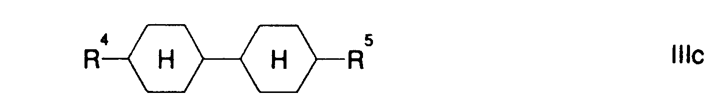 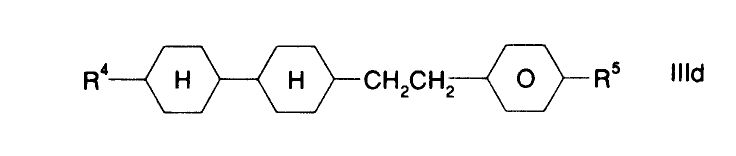 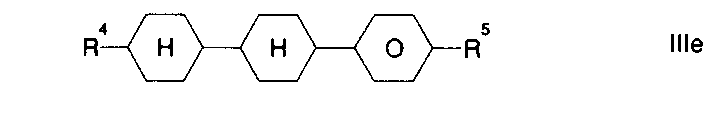 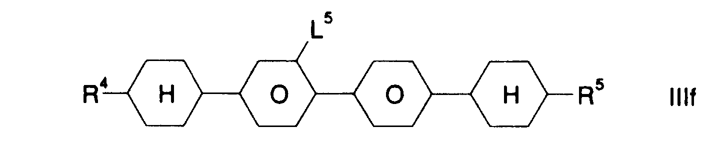 in which L⁵ is H or F.

6. Nematic liquid crystalline medium comprising a composition as defined in any one of the claims 1 to 5.

7. Nematic liquid crystalline medium according to claim 6 characterized in that it essentially consists of
40-95 % by weight of component A
3-35 % by weight of component B
4-50 % by weight of component C

8. Nematic liquid crystalline medium according to claim 7 characterized in that component A essentially consists of
15 to 45 % of at least one compound of formula Ib,
5 to 25 % of at least one compound of formula Ii,
15 to 40 % of at least one compound of formula Ij and
0 to 10 % of at least one compound of formula If.

9. Nematic liquid crystalline medium according to claim 7 or 8 characterized in that component C essentially consists of
40 to 80 % by weight of at least one compound of formula IIIa, and
20 to 60 % by weight of at least one compound of formula IIIf.

## Patentansprüche

1. Verbesserte Flüssigkristallanzeige mit aktiver Matrix, enthaltend
- einen Dünnschichttransistor oder eine MIM-Diode
- ein Paar paralleler Substrate und ein zwischen dem Paar von Substraten angeordnetes nematisches flüssigkristallines Medium, dadurch gekennzeichnet, daß das nematische flüssigkristalline Medium im wesentlichen aus
a) einer Komponente A mit einer oder mehreren Verbindungen der Formel I: 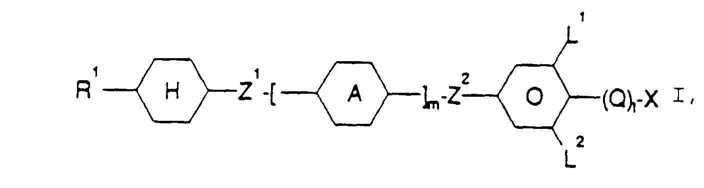 worin
R¹ Alkyl, Alkoxy, Alkenyloxy, Oxaalkyl oder Alkenyl mit 1 bis 15 C-Atomen,
Q CF₂, OCF₂, OCH₂CF₂, OCF₂CF₂,
X H, F oder Cl,
Z¹ und Z² jeweils unabhängig voneinander -C≡C-, -CH₂CH₂-, -CO-O- oder eine Einfachbindung, 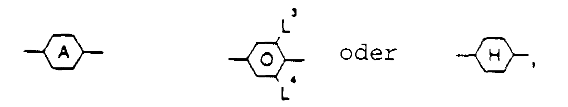 L¹, L²,
L³ und L⁴ jeweils unabhängig voneinander H oder F,
1 0 oder 1 und
m 0 oder 1 bedeuten,
mit der Maßgabe, daß bei X gleich H l 1 bedeutet,
b) einer Komponente B mit einer oder mehreren Verbindungen der Formel II 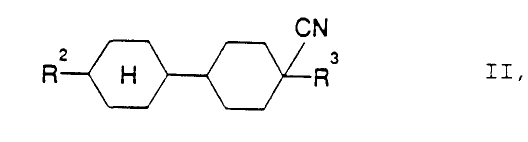 worin
R² die für R¹ angegebene Bedeutung und
R³ die für R¹ angegebene Bedeutung besitzt,
c) einer Komponente C mit einer oder mehreren Verbindungen der Formel III 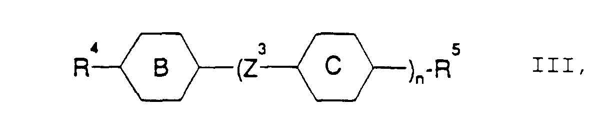 worin 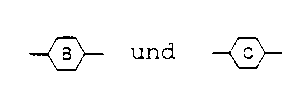 die für angegebene Bedeutung 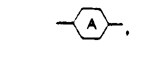 besitzen,
n 1, 2 oder 3 bedeutet,
R⁴ und R⁵ die für R¹ angegebene Bedeutung besitzen,
und
Z³ die für Z¹ angegebene Bedeutung besitzt,
besteht.

2. Flüssigkristallanzeige mit aktiver Matrix nach Anspruch 1, dadurch gekennzeichnet, daß das nematische flüssigkristalline Medium eine dielektrische Anisotropie von etwa 2,0 bis 17,0 aufweist.

3. Flüssigkristallanzeige mit aktiver Matrix nach Anspruch 1 oder 2, dadurch gekennzeichnet, daß das nematische flüssigkristalline Medium einen Klärpunkt von mehr als 75°C aufweist.

4. Flüssigkristallanzeige mit aktiver Matrix nach einem der Ansprüche 1 bis 3, dadurch gekennzeichnet, daß die Verbindung der Formel I aus der Gruppe bestehend aus den Verbindungen der Formeln Ia bis II ausgewählt ist, 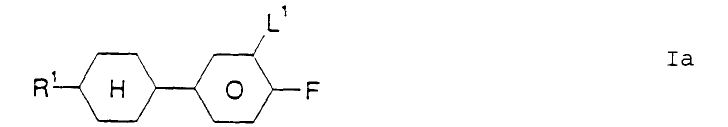 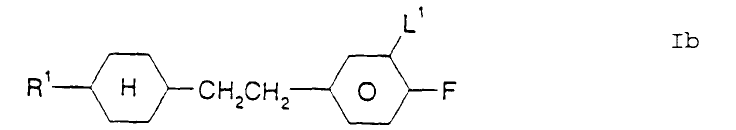 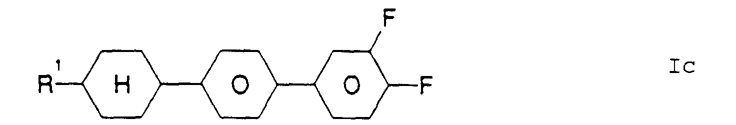 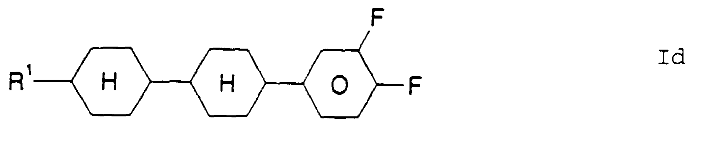 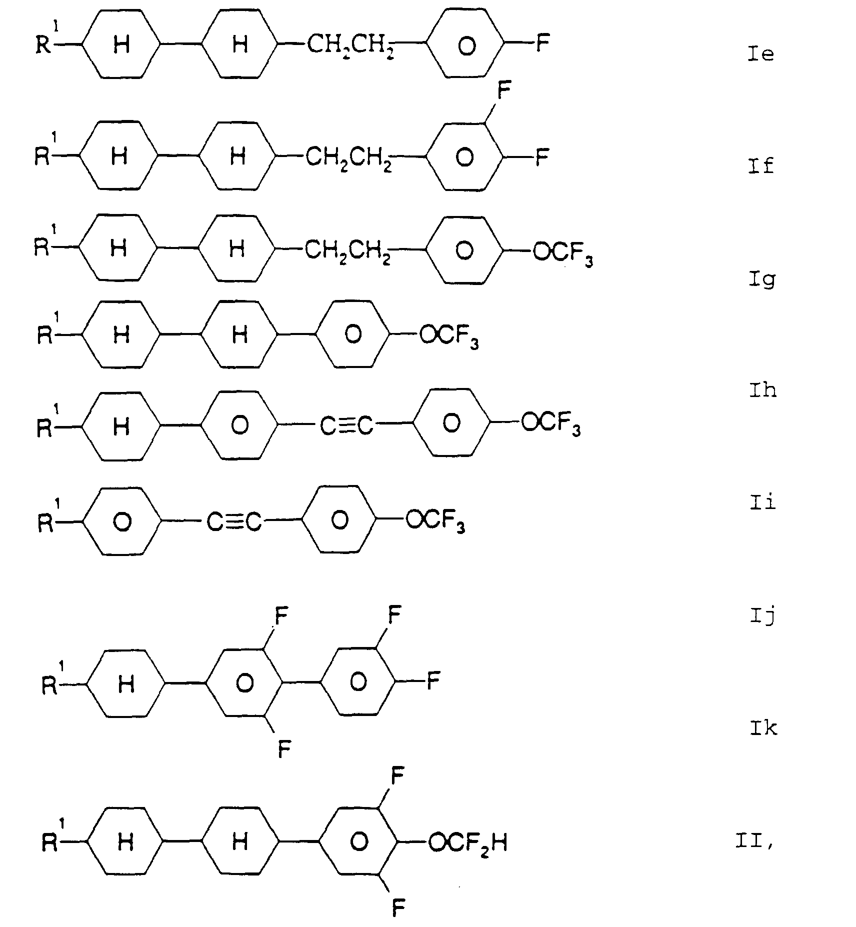 worin R¹ und L¹ die angegebene Bedeutung besitzen.

5. Flüssigkristallanzeige mit aktiver Matrix nach einem der Ansprüche 1 bis 4, dadurch gekennzeichnet, daß die Verbindung der Formel III aus der Gruppe bestehend aus den Verbindungen der Formeln IIIa bis IIIf ausgewählt ist, 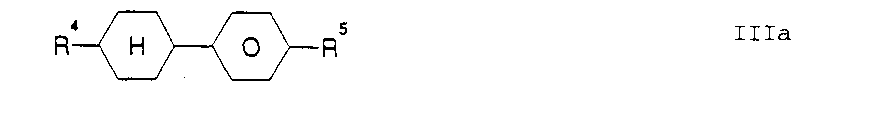 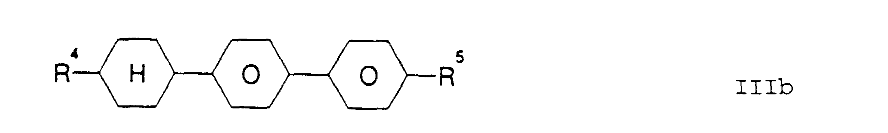 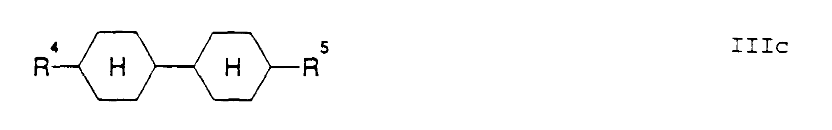 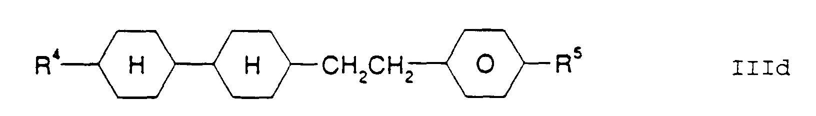 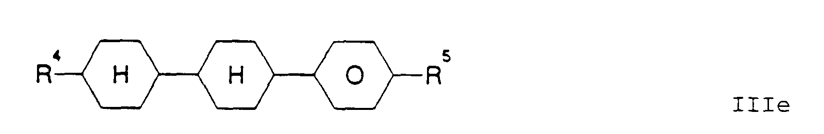 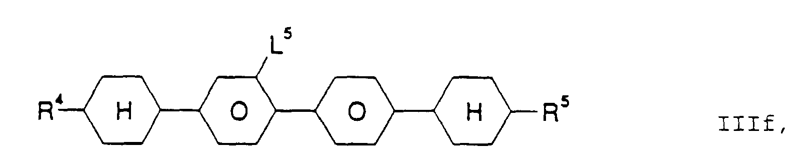 worin L⁵ H oder F bedeutet.

6. Nematisches flüssigkristallines Medium mit einer zusammensetzung gemäß der Definition in einem der Ansprüche 1 bis 5.

7. Nematisches flüssigkristallines Medium nach Anspruch 6, dadurch gekennzeichnet, daß es im wesentlichen aus
40-95 Gew.-% der Komponente A
3-35 Gew.-% der Komponente B und
4-50 Gew.-% der Komponente C besteht.

8. Nematisches flüssigkristallines Medium nach Anspruch 7, dadurch gekennzeichnet, daß die Komponente A im wesentlichen aus
15 bis 45% mindestens einer Verbindung der Formel Ib,
5 bis 25% mindestens einer Verbindung der Formel Ii,
15 bis 40% mindestens einer Verbindung der Formel Ij und
0 bis 10% mindestens einer Verbindung der Formel If
besteht.

9. Nematisches flüssigkristallines Medium nach Anspruch 7 oder 8, dadurch gekennzeichnet, daß die Komponente C im wesentlichen aus
40 bis 80 Gew.-% mindestens einer Verbindung der Formel IIIa und
20 bis 60 Gew.-% mindestens einer Verbindung der Formel IIIf
besteht.

## Revendications

1. Affichage à cristaux liquides à matrice active perfectionné comprenant
◆ un transistor en film mince ou une diode MIM
◆ une paire de substrats parallèles et un milieu à cristaux liquides nématique disposé entre la paire de substrats, caractérisé en ce que le milieu à cristaux liquides nématique consiste essentiellement en
a) un composant A comprenant un ou plusieurs composés de formule I 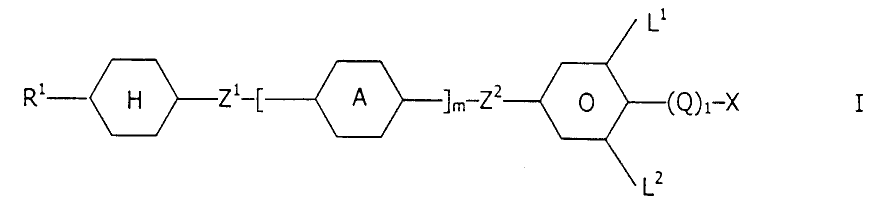 dans laquelle
R¹ représente un alkyle, alcoxy alcényloxy, oxaalkyle ou alcényle ayant 1 à 15 atomes de carbone,
Q représente CF₂, OCF₂, OCH₂CF₂, OCF₂CF₂,
X représente H, F ou CI,
Z¹ et Z² représentent chacun indépendamment -C≡C, -CH₂CH₂-, -CO-O- ou une liaison simple ; 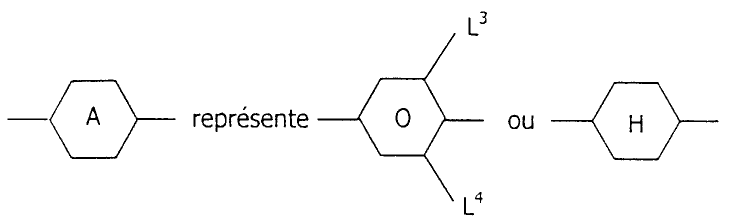
L¹, L², L³ et L⁴ représentent chacun indépendamment H ou F,
l vaut 0 ou 1, et
m vaut 0 ou 1,
sous réserve que I vaut 1 dans le cas où X représente H
b) un composant B comprenant un ou plusieurs composés de formule Il 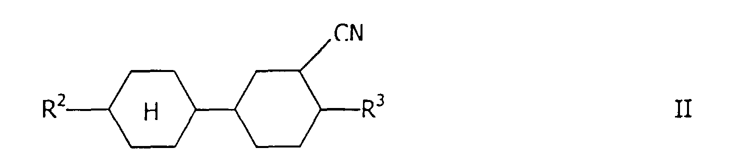 dans laquelle
R² a la signification donnée pour R¹,
R³ a la signification donnée pour R¹,
c) un composant C comprenant un ou plusieurs composés de formule III 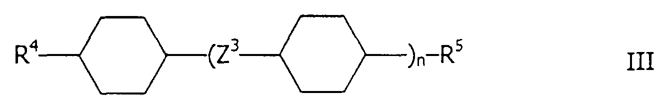 dans laquelle 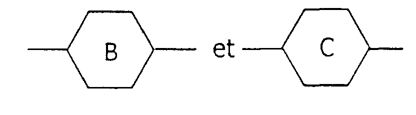 ont la signification donnée pour 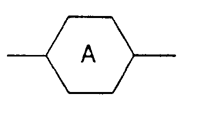
n vaut 1, 2 ou 3,
R⁴ et R⁵ ont la signification donnée pour R¹, et
Z³ a la signification donnée pour Z¹.

2. Affichage à cristaux liquides à matrice active selon la revendication 1, caractérisé en ce que le milieu à cristaux liquides nématique possède une anisotropie diélectrique d'environ 2,0 à 17,0.

3. Affichage à cristaux liquides à matrice active selon la revendication 1 ou 2, caractérisé en ce que le milieu à cristaux liquides nématique possède un point de clarté supérieur à 75°C.

4. Affichage à cristaux liquides à matrice active selon l'une des revendications 1 à 3, caractérisé en ce que le composé de formule I est choisi dans le groupe constitué par les composés de formules la à II 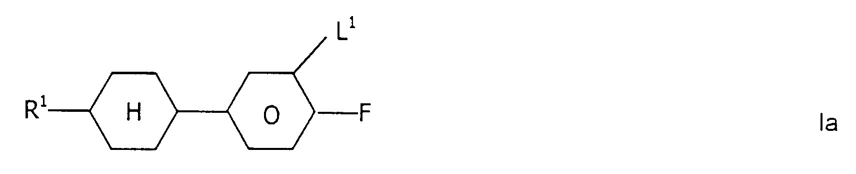 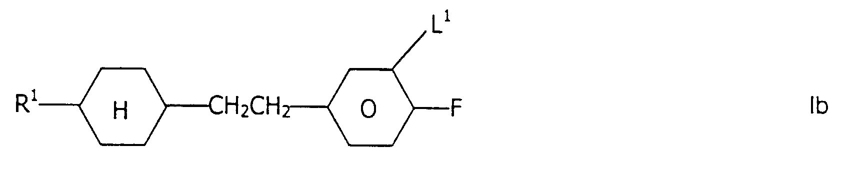 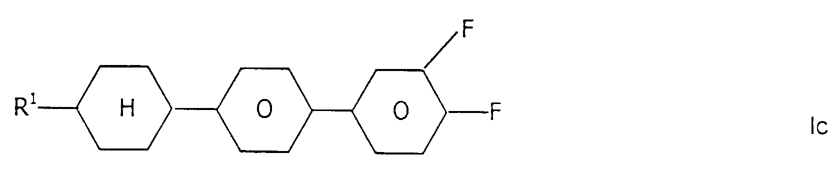 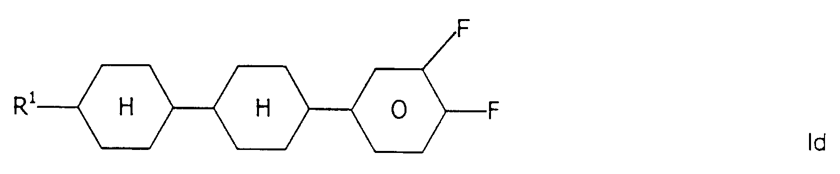 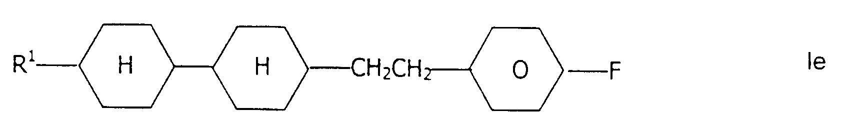 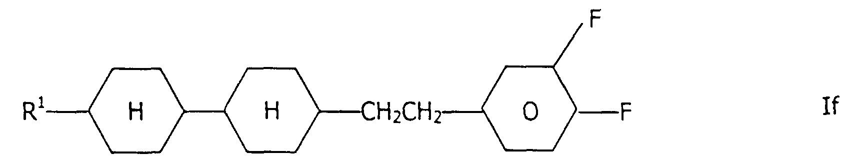 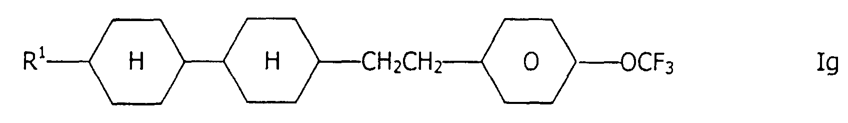 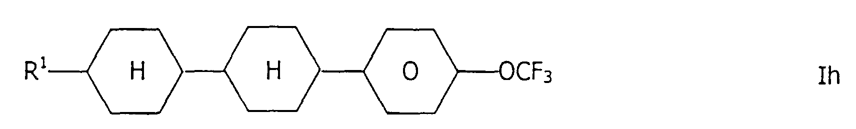 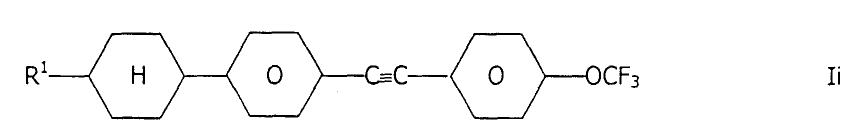 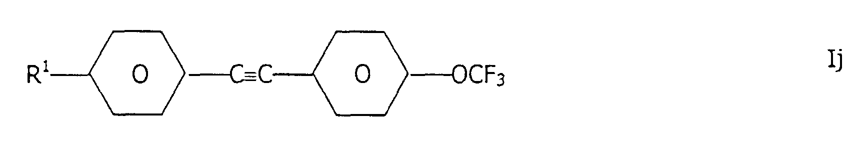 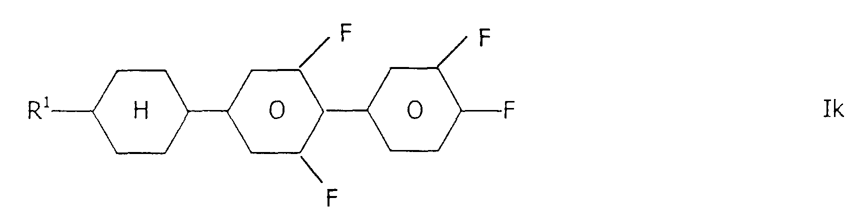 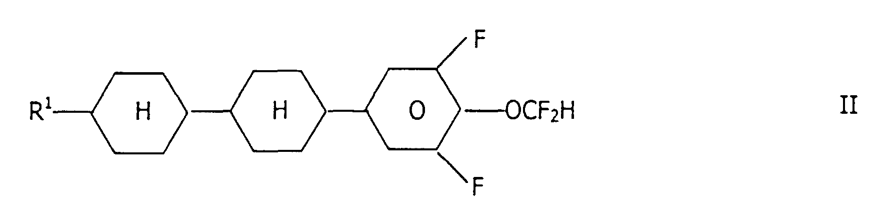 dans lesquelles R¹ et L¹ sont la signification donnée.

5. Affichage à cristaux liquides à matrice active selon l'une des revendications 1 à 4, caractérisé en ce que le composé de formule III est choisi dans le groupe constitué des composés de formules IIIa à IIIf 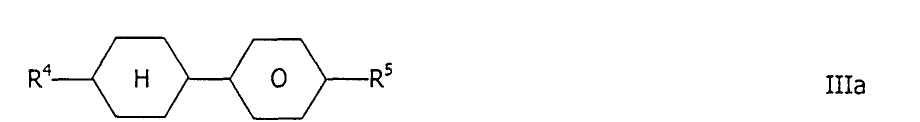 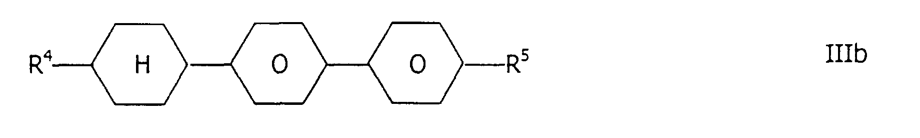 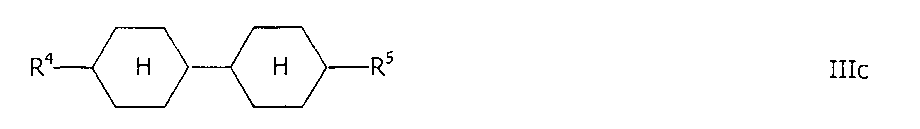 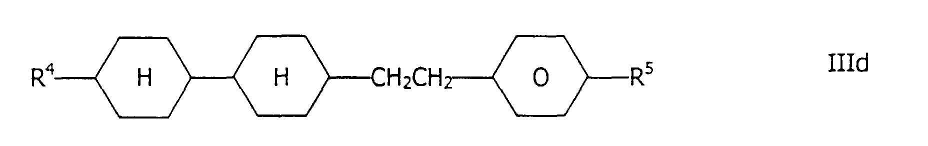 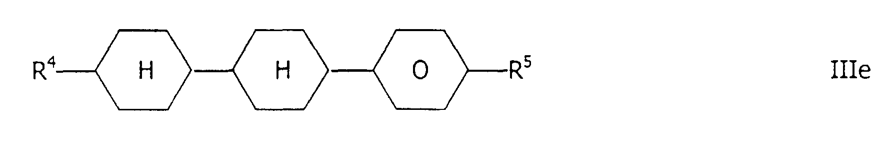 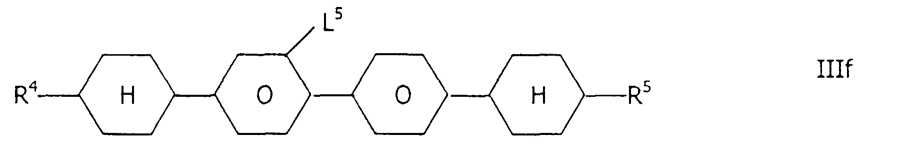 dans lesquelles L⁵ représente H ou F.

6. Milieu à cristaux liquides nématique comprenant une composition telle que définie dans l'une quelconque des revendications 1 à 5.

7. Milieu à cristaux liquides nématique selon la revendication 6, caractérisé en ce qu'il comprend essentiellement
◇ 40-95 % en poids de composant A
◇ 3-35 % en poids de composant B
◇ 4-50 % en poids de composant C.

8. Milieu à cristaux liquides nématique selon la revendication 7, caractérisé en ce que le composant A comprend essentiellement
◇ 15 à 45 % d'au moins un composé de formule Ib,
◇ 5 à 25 % d'au moins un composé de formule Ii,
◇ 15 à 40 % d'au moins un composé de formule Ij et
◇ 0 à 10 % d'au moins un composé de formule If.

9. Milieu à cristaux liquides nématique selon la revendication 7 ou 8, caractérisé en ce que le composant C comprend essentiellement
◇ 40 à 80 % en poids d'au moins un composé de formule IIIa, et
◇ 20 à 60 % en poids d'au moins un composé de formule IIIf.
